# FASCICULE DE BREVET EUROPEEN

(11) **EP 3 442 171 B1**
(45) Date de publication et mention de la délivrance du brevet: **05.02.2020**
(21) Numéro de dépôt: 18198283.6
(22) Date de dépôt: 14.12.2012
(51) Int. Cl.: H04L 12/28

(54) **SYSTÈME DE CONTRÔLE POUR JOUER UN FLUX DE DONNÉES SUR UN DISPOSITIF RÉCEPTEUR**
KONTROLLSYSTEM ZUM ABSPIELEN EINES DATENFLUSSES AUF EINEM EMPFANGSGERÄT
CONTROL SYSTEM FOR PLAYING BACK A DATA STREAM ON A RECEIVER DEVICE

(30) Priorité: 23.12.2011 FR 1162444
(43) Date de publication de la demande: 13.02.2019
(62) Demande divisionnaire de: 16161246.0
(73) Titulaire: Orange, 75015 Paris (FR)
(72) Inventeur: CAZOULAT, Renaud, 92326 Châtillon (FR); CONAN, Martin, 92326 CHATILLON (FR); CAPDEVIELLE, Marc, 92326 CHATILLON (FR)

(56) Documents cités:
- EP-A1- 1 819 101
- MONICA FERNANDEZ ET AL: "Empowering UPnP/DLNA for IPTV services", INTERNET COMMUNICATIONS (BCFIC RIGA), 2011 BALTIC CONGRESS ON FUTURE, IEEE, 16 février 2011 (2011-02-16), pages 7-12, XP031983047, DOI: 10.1109/BCFIC-RIGA.2011.5733207 ISBN: 978-1-4244-8511-6

## Description

La présente invention concerne un système de contrôle pour jouer un flux de données.

Les boitiers de décodage vidéo numériques, couramment appelés Set-Top-Box (STB), permettent d'accéder à des contenus vidéo tels des programmes télévisuels ou des contenus vidéos de type VOD (Video On Demand - Vidéo à la demande), à travers un réseau de transmission numérique (par Internet, satellite ou TNT par exemple).

Les STB peuvent en outre intégrer d'autres fonctions :
- un disque dur permettant d'enregistrer un programme durant une plage horaire prédéfinie ou à la volée afin de permettre à un utilisateur de mettre le programme TV courant en pause et de le visionner ultérieurement ;
- un accès à l'Internet ;
- un service de diffusion de radio Web ;
- un support DLNA permettant de naviguer dans un gestionnaire de fichiers d'un ordinateur jouant un rôle de serveur DLNA et de jouer un contenu stocké sur l'ordinateur ;
- etc.

Ces nombreuses fonctions rendent complexe l'utilisation de la STB. Pour utiliser une fonction, un utilisateur doit naviguer dans une interface graphique s'affichant sur l'écran d'un téléviseur à l'aide d'une télécommande spécifique. Compte tenu des contraintes de lisibilité induites par l'affichage sur un écran TV et des contraintes liées à l'utilisation d'une télécommande pour naviguer dans l'interface graphique, celle-ci manque souvent de simplicité et de confort d'utilisation. En outre, toutes ces fonctions augmentent le coût de la STB.

Il existe également des dispositifs, appelés « media server », dédiés à la fourniture de contenus au sein d'un réseau domestique. Le document EP1819101 décrit notamment un dispositif de ce type comprenant des moyens de réception d'un flux à jouer connectés à une unité de transmission en mode streaming, qui reçoit le flux et le retransmet à un dispositif de décodage et restitution, ou « media renderer ». Un dispositif de contrôle intégrant des moyens d'interface utilisateur permet à un utilisateur de sélectionner un flux de données à jouer. Suite à la sélection par un utilisateur d'un flux à jouer, il transmet au dispositif de restitution une requête pour jouer le flux sélectionné. Ce système est cependant complexe à mettre en œuvre.

La présente invention vise à améliorer la situation.

A cet effet, elle concerne un système de contrôle pour jouer un flux de données comprenant
- des moyens d'interface utilisateur pour permettre à un utilisateur de sélectionner un flux de données à jouer,
- des moyens de réception du flux de données à jouer,
- des moyens de transmission du flux de données reçu à travers des moyens de sortie externe vers un dispositif apte à jouer le flux,
   caractérisé par le fait qu'il comprend un premier et un deuxième dispositif, distincts l'un de l'autre,

- le premier dispositif, dit dispositif récepteur, intégrant les moyens de réception du flux de données et les moyens de transmission du flux reçu à travers les moyens de sortie externe et
- le deuxième dispositif, dit dispositif de contrôle, intégrant les moyens d'interface utilisateur et comprenant des moyens pour, suite à la sélection par un utilisateur d'un flux à jouer, transmettre au premier dispositif une commande pour jouer le flux sélectionné, ladite commande contenant des données de localisation du flux sélectionné.

L'invention consiste donc à séparer les moyens d'interface utilisateur permettant de sélectionner le flux à jouer et les moyens pour gérer le flux de données (c'est-à-dire pour le recevoir et le retransmettre vers un dispositif apte à le jouer) dans deux dispositifs distincts, un dispositif de contrôle et un dispositif récepteur respectivement. Le dispositif de contrôle obtient l'adresse de localisation du flux à jouer et la transmet au dispositif récepteur qui n'a plus qu'à récupérer le flux à l'adresse fournie. Le dispositif de contrôle peut offrir une interface utilisateur conviviale, sans les contraintes d'affichage et de navigation sur un écran de téléviseur. En outre, le dispositif récepteur peut être techniquement le plus simple possible, sans moyens d'interface utilisateur pour sélectionner le flux à jouer, ce qui limite son coût. Selon l'invention, toute l'interactivité entre l'utilisateur et l'interface utilisateur pour sélectionner le flux est réalisée au niveau du dispositif de contrôle.

Le premier dispositif comprend des moyens pour établir une connexion sans fil directe avec le deuxième dispositif de connexion et recevoir des données de connexion à un point d'accès sans fil et le deuxième dispositif comprend des moyens d'assistance de connexion du premier dispositif à un point d'accès sans fil, agencés pour afficher une interface graphique de saisie de données de connexion du premier dispositif à un point d'accès sans fil et pour transmettre lesdites données de connexion saisies au premier dispositif.

Le premier dispositif peut être adapté pour simuler un point d'accès sans fil. Le deuxième dispositif peut alors de connecter directement au premier dispositif. Grâce à cela, le dispositif récepteur peut être dépourvu de moyens d'interface utilisateur pour saisir les données requises pour se connecter à un point d'accès sans fil.

Les moyens de sélection d'un flux peuvent comprendre des moyens d'affichage de données d'interface graphique, des moyens agencés pour accéder à une interface utilisateur de sélection de contenus sur un serveur distant et/ou des moyens agencés pour accéder à un gestionnaire de fichiers sur un serveur de stockage d'un réseau local auquel le premier et le deuxième dispositif appartiennent.

Les données d'interface utilisateur peuvent comprendre des données d'interface graphique stockées dans le dispositif de contrôle ou des données provenant d'un serveur distant ou d'un serveur local.

Avantageusement, le premier dispositif est dépourvu de moyens de sélection par un utilisateur d'un flux de données vidéo à jouer. Toute l'interface utilisateur permettant la sélection d'un flux à jouer est ainsi située sur le deuxième dispositif.

L'invention concerne aussi un dispositif récepteur pour le système précédemment défini, comprenant des moyens de réception d'un flux de données vidéo à jouer, des moyens de sortie vidéo vers un dispositif externe apte à jouer le flux reçu, des moyens de transmission du flux de données vidéo reçues à travers les moyens de sortie vidéo, des moyens de réception d'une contrôle pour jouer un flux, ladite contrôle contenant une adresse de localisation du flux.

L'invention concerne également un dispositif contrôle pour le système de la revendication 1, comprenant des moyens d'interface utilisateur pour permettre à un utilisateur de sélectionner un flux de données à jouer et des moyens pour, suite à la sélection par un utilisateur d'un flux à jouer, transmettre vers un autre dispositif une commande pour jouer le flux sélectionné, ladite commande contenant une adresse de localisation du flux sélectionné.

L'invention concerne encore un procédé de contrôle pour jouer un flux de données, comprenant
- une étape de sélection d'un flux de données à jouer à l'aide de moyens d'interface utilisateur,
- une étape de réception du flux de données à jouer,
- une étape de transmission du flux de données reçu vers un dispositif apte à jouer le flux,
   caractérisé par le fait que
- les étapes de réception d'un flux de données à jouer et de transmission du flux de données reçu vers un dispositif apte à jouer ledit flux sont réalisées par un premier dispositif, dit dispositif récepteur ;
- l'étape de sélection d'un flux de données à jouer est réalisée par un deuxième dispositif, dit dispositif de contrôle, distinct du premier dispositif,
- et il est prévu une étape de transmission par le deuxième dispositif au premier dispositif, suite à la sélection par un utilisateur d'un flux à jouer, d'une commande pour jouer le flux sélectionné, ladite commande contenant des données de localisation du flux sélectionné.
L'invention est définie par les revendications indépendantes 1, 9, 11 et 13. L'invention sera mieux comprise à l'aide de la description suivante d'une forme de réalisation particulière du système de contrôle de l'invention en référence aux dessins annexés sur lesquels
- La figure 1 représente une vue schématique du système selon une forme de réalisation particulière de l'invention ;
- La figure 2 représente un schéma bloc fonctionnel du dispositif récepteur du système de la figure 1 ;

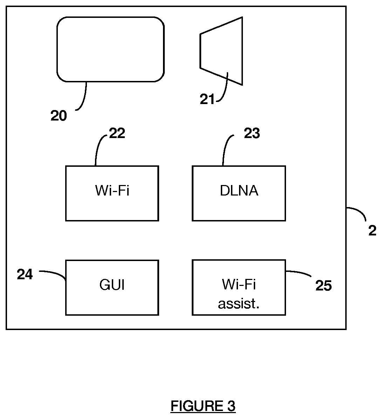

- La figure 3 représente un schéma bloc fonctionnel du dispositif de contrôle du système de la figure 1
- La figure 4 représente un organigramme des étapes de procédé mises en œuvre pour connecter le dispositif récepteur de la figure 1 à une passerelle ;
- Les figures 5A et 5B représentent les étapes de procédé mises en œuvre lors du fonctionnement du système de la figure 1, selon deux exemples de réalisation particuliers.

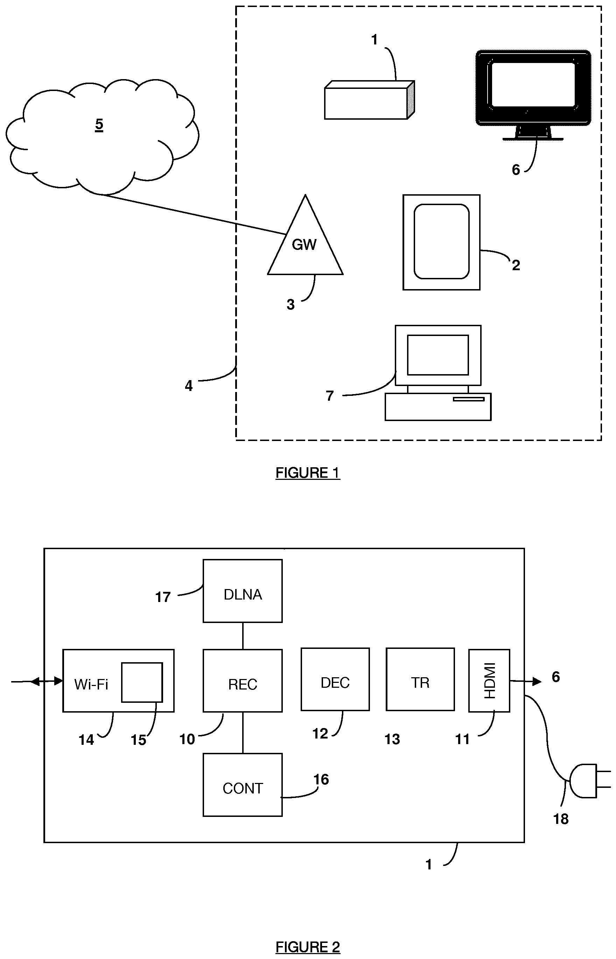

Le système représenté sur la figure 1 comprend un premier dispositif 1, dit récepteur, et un deuxième dispositif 2, dit de contrôle, distincts l'un de l'autre.

Le dispositif récepteur 1 et le dispositif de contrôle 2 appartiennent à un réseau local 4 géré par une passerelle 3, en l'espèce un point d'accès WI-Fi.

La passerelle 3 est connectée à un réseau externe de communication, ici l'Internet 5, par exemple par l'intermédiaire d'une ligne ADSL (*Asymmetric Digital Subscriber Line* - *liaison numérique asymétrique*)*.*

Le réseau local 4 comprend également un ordinateur personnel, ou PC (Personal Computer), 7 et un dispositif de restitution multimédia 6, par exemple ici un téléviseur à écran plat.

Le dispositif récepteur 1, le dispositif de contrôle 2 et l'ordinateur 7 sont connectés à la passerelle 3, par une liaison sans fil, ici une liaison Wi-Fi. On pourrait envisager une connexion filaire entre les appareils du réseau local 4 (1, 2 et/ou 7) et la passerelle 3. Le dispositif récepteur 1 est connecté au dispositif de restitution multimédia 6, ici par des connecteurs HDMI.

Le dispositif récepteur 1, le dispositif de contrôle 2, le dispositif de restitution multimédia 6 et le PC 7 forment un réseau local DLNA. Le standard DLNA (Digital Living Network Alliance) définit différents acteurs :
- le serveur : stocke et fournit à la demande les contenus numériques ;
- le « renderer » : décode les contenus numériques pour pouvoir les jouer ;
- le « player » : joue les contenus décodés ;
- le contrôleur : permet de parcourir les contenus proposés par les serveurs et de les faire jouer par les renderers/players.

Dans l'exemple particulier décrit ici, des acteurs DLNA sont installés sur les appareils du réseau DLNA de la façon suivante :
- le dispositif récepteur 1 joue un rôle de renderer DLNA ;
- le dispositif de contrôle 2 joue un rôle de renderer/player DLNA, de serveur DLNA et de contrôleur DLNA ;
- le PC 7 joue un rôle de serveur DLNA et
- le dispositif de restitution multimédia 6 joue un rôle de player DLNA.

On va maintenant décrire de façon plus détaillée le dispositif récepteur 1. En référence à la figure 2, ce dispositif récepteur 1 comprend
- un module 10 de réception d'un flux de données à jouer,
- une interface de sortie 11 vers un dispositif externe apte à jouer le flux reçu ;
- un module 12 de décodage du flux de données reçu ;
- un module 13 de retransmission du flux de données, reçu et décodé, à travers l'interface de sortie 11 ;
- un module de communication sans fil, ici Wi-Fi, 14, intégrant un sous-module 15 de connexion Wi-Fi à un point d'accès WI-Fi ;
- un module 16 de contrôle de réception d'un flux de données; et
- un module DLNA 17.

Le module de contrôle 16 est agencé pour, sur réception d'un message de commande en provenance d'un dispositif de contrôle (par exemple le dispositif de contrôle 2), interpréter le message de commande et transmettre au module de réception 10 une commande pour récupérer un flux de données à jouer à une adresse de localisation indiquée dans le message de commande. Il peut s'agir d'une adresse sous la forme d'une URL, comportant une adresse IP multicast (dans le cas d'un flux TV), une adresse IP unicast (dans le cas d'un flux de VOD), d'une adresse de stockage sur un serveur ou un dispositif de stockage (dans le cas d'un contenu stocké dans un serveur local ou distant).

Le module de réception 10 est agencé pour, sur réception d'une commande pour récupérer un flux de données, la commande contenant une adresse de localisation du flux, récupérer le flux considéré à l'adresse de localisation reçue.

Le module de décodage 12, connecté en entrée au module de réception 10 et en sortie au module de retransmission 13, est agencé pour décoder un flux de données reçu par le module de réception 10 de manière à ce qu'il puisse être joué par un dispositif de restitution externe apte à jouer le contenu, par exemple le dispositif de restitution multimédia 6. Le décodage comprend un déchiffrement du flux, si celui-ci est sous forme chiffrée, une décompression du flux, si celui-ci est sous forme compressée, et une conversion de format afin de convertir le format des données du flux reçu en un format compatible avec l'interface de sortie vidéo (ici HDMI - High Definition Multimedia Interface).

Le module de retransmission 13, connecté en entrée au module de décodage 12 et en sortie à l'interface de sortie 11, est agencé pour retransmettre un flux de données à jouer, après décodage, à travers l'interface de sortie 11, vers un dispositif externe apte à jouer, c'est-à-dire à restituer, le flux. Ce dispositif externe peut par exemple être le dispositif de restitution multimédia 6.

L'interface de sortie 11 comprend ici un connecteur HDMI (High-Definition Multimedia Interface) mâle.

Le module de communication Wi-Fi 14 est agencé pour mettre en œuvre le protocole de communication Wi-Fi afin de communiquer en Wi-Fi avec d'autres dispositifs. Le sous-module de connexion Wi-Fi 15 est agencé pour connecter le dispositif récepteur 1 à un point d'accès Wi-Fi en utilisant le mode de fonctionnement Wi-Fi ad hoc, comme cela sera décrit plus loin dans la description du procédé.

Le module DLNA 17 est agencé pour mettre en œuvre le standard DLNA de manière à interagir, en tant que renderer DLNA, avec d'autres acteurs DLNA du réseau local 4, par l'intermédiaire de la passerelle 3. Ce module DLNA est agencé pour commander l'obtention d'un flux de données sur un serveur DLNA, son décodage et sa restitution, selon les protocoles définis par le standard DLNA.

Les modules 10, 12, 13, 16, 17 sont des modules applicatifs (ou logiciels).

Le dispositif récepteur 1 comprend en outre un câble 18 muni d'une prise d'alimentation et un module central de commande, non représenté, auquel tous les éléments du dispositif 1 sont connectés et agencé pour contrôler le fonctionnement de ces éléments.

On soulignera que le dispositif récepteur 1 est dépourvu de moyens d'interface utilisateur pour permettre à un utilisateur de sélectionner un flux à jouer.

Le dispositif de contrôle 2 est ici une tablette numérique tactile, par exemple un iPad©. La tablette 2 comprend, de façon classique, un écran d'affichage tactile 20, des moyens de restitution sonore 21, un module 22 de communication sans fil, ici Wi-Fi, et un module DLNA 23. Elle est apte à décoder et jouer un flux de données (vidéo, audio, image), récupéré à travers l'Internet, sur un dispositif de stockage du réseau local 4 ou stocké dans une mémoire propre à la tablette 2.

Elle comprend en outre un module applicatif 24 d'interface utilisateur déportée pour un dispositif récepteur tel que le dispositif 1 et un module applicatif 25 d'assistance à la connexion d'un dispositif récepteur, tel que le dispositif 1, à un point d'accès Wi-Fi. Le module d'interface utilisateur 24 permet de mettre en œuvre sur la tablette 2 une interface utilisateur GUI pour sélectionner un flux de données à jouer et pour réaliser diverses actions sur ce flux (pause, stop, avance ou retour rapide).

Le flux de données à jouer peut correspondre par exemple à un programme télévisuel diffusé par une chaîne TV, à une vidéo à la demande ou à un contenu (vidéo, audio ou image) stocké dans un dispositif du réseau local 4 (par exemple la tablette 2 ou le PC 7) ou fourni par un serveur Web. Les flux de données sont accessibles auprès de différentes sources et peuvent être sélectionnés au moyen de différentes interfaces utilisateurs. Le module d'interface 24 est agencé pour accéder à ces différentes interfaces utilisateurs de sélection et pour les afficher sur l'écran tactile de la tablette 2. Les données d'interface utilisateur de sélection peuvent être stockées localement dans la tablette 2 ou être accessibles à travers un réseau (en l'espèce l'Internet ou le réseau local 4) auprès d'un serveur ou d'un dispositif de stockage.

Dans l'exemple particulier décrit ici, le module d'interface 24 est agencé pour proposer à un utilisateur, par affichage d'une interface graphique sur l'écran de la tablette 2, différentes rubriques correspondant à différents types de flux: TV, VOD, mes contenus (vidéo, musique, image), YouTube, etc.

Dans l'exemple particulier de la description, sur sélection de l'une de ces rubriques, le module d'interface 24 est agencé pour accéder à une interface graphique utilisateur ou GUI (Graphical User Interface) de sélection et pour l'afficher sur l'écran du dispositif de contrôle 2. Cette interface peut être accessible auprès d'un serveur Web de service de télévision, d'un serveur Web de service de vidéo à la demande (VOD), d'un serveur Web de service YouTube ou d'un dispositif de stockage du réseau local 4.

L'interface GUI de sélection d'un programme TV est fournie par le serveur Web de service de télévision. Elle comprend, de façon connue, un guide électronique de programmes télévisuels permettant d'accéder à une grille des programmes de différentes chaînes de télévision et de sélectionner un programme de télévision à regarder.

L'interface GUI de sélection d'une VOD est fournie par le serveur Web de VOD. Elle comprend, de façon connue, un catalogue de VOD et un moteur de recherche par mots clés. Le catalogue de VOD et le moteur de recherche permettent d'accéder, pour chaque VOD, à une fiche détaillée d'informations et à des commandes activables, ici par un appui tactile sur l'écran 20 du dispositif de contrôle 2, pour notamment visualiser un extrait de VOD ou pour louer une VOD.

L'interface GUI de sélection du service YouTube est accessible auprès d'un serveur Web de service YouTube. Elle comprend, de façon connue, un catalogue de vidéos disponibles sur YouTube et un moteur de recherche par mots clés.

L'interface GUI de sélection de « mes contenus » (vidéo, musique, image) comprend un gestionnaire de fichiers permettant de sélectionner et de lancer la lecture de fichiers stockés sur un dispositif de stockage ici du réseau local 4, ce dispositif jouant un rôle de serveur DLNA. On pourrait envisager d'accéder à un gestionnaire de fichiers stockés sur un dispositif de stockage ou un serveur distant, externe, au réseau local et accessible par l'intermédiaire d'un réseau externe.

En outre, suite à la sélection d'un flux à jouer par un utilisateur et à une commande de l'utilisateur pour jouer ce flux sur le dispositif de restitution 6, le module 24 est agencé pour transmettre au dispositif récepteur 1 une commande « PLAY »pour jouer le flux. La commande PLAY contient l'adresse de localisation du flux à jouer, ici sous la forme d'une URL.

Le module 25 d'assistance à la connexion est agencé pour, sur réception d'une requête de connexion en provenance d'un dispositif récepteur (par exemple le dispositif 1), afficher une interface graphique utilisateur (ou interface GUI) de saisie de données de connexion à un point d'accès Wi-Fi et pour transmettre les données de connexion saisies au dispositif récepteur ayant au point d'accès Wi-Fi.

Le module DLNA 23 est agencé pour mettre en œuvre le standard DLNA de manière à interagir, en tant que de renderer/player DLNA, de serveur DLNA ou de contrôleur DLNA, avec d'autres acteurs DLNA du réseau local 4, par l'intermédiaire de la passerelle 3. Ce module DLNA est agencé pour commander l'obtention d'un flux de données sur un serveur DLNA, son décodage et sa restitution, pour fournir des flux de données stocké dans la tablette 2, pour permettre de parcourir les contenus stockés dans la tablette et de les faire jouer par les renderers/players, selon les protocoles définis par le standard DLNA.

Le dispositif de restitution multimédia 6 est ici un téléviseur à écran plat équipé d'un connecteur HDMI femelle. Il pourrait s'agir de tout autre dispositif apte à jouer un contenu multimédia (vidéo, audio ou image).

Le PC 7 stocke des contenus multimédia (vidéo, audio, image). Il joue un rôle de serveur DLNA dans le réseau local 4.

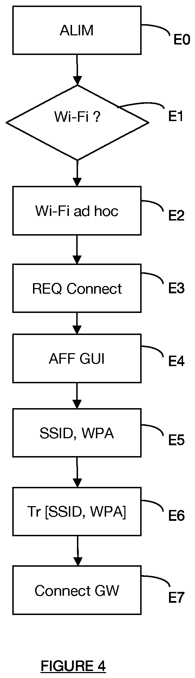

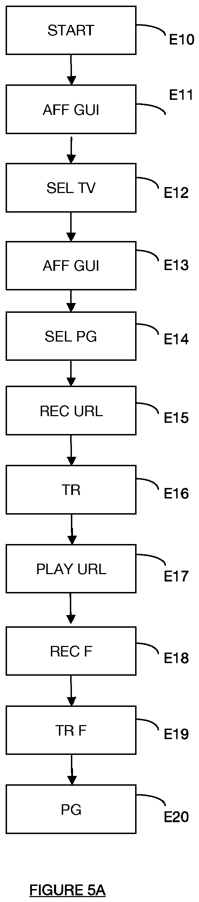

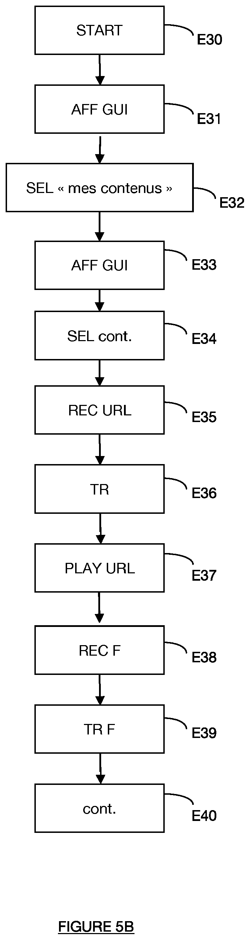

En référence aux figures 4, 5A et 5B, le fonctionnement du système de la figure 1 va maintenant être décrit.

On va d'abord décrire les étapes mises en œuvre pour connecter le dispositif récepteur 1 à la passerelle 3, sachant que le dispositif 1 est dépourvu de moyens d'interface utilisateur pour permettre à un utilisateur de saisie des données nécessaires de connexion à la passerelle 3. Les étapes exécutées par le dispositif récepteur 1 sont mises en œuvre par le sous-module de connexion Wi-Fi 15.

Le dispositif récepteur 1 étant dépourvu de moyens d'interface utilisateur, sa connexion à la passerelle 3 s'effectue à l'aide du dispositif de contrôle 2.

Lors d'une étape E0, un utilisateur branche le dispositif récepteur 1 au secteur afin de le mettre en marche.

Lors d'une étape de test E1, le dispositif récepteur 1 vérifie s'il est connecté à un point d'accès Wi-Fi (ou borne Wi-Fi). Aucune connexion Wi-Fi valide n'ayant encore été établie, le test est négatif. Lors d'une étape E2, le dispositif récepteur 1 se met alors en mode de fonctionnement Wi-Fi ad hoc pour établir une connexion directement avec le dispositif de contrôle 2. Le mode Wi-Fi ad hoc consiste, de façon connue, pour le dispositif récepteur 1 à simuler un point d'accès Wi-Fi avec un nom de réseau SSID (Service Set Identifier). Le dispositif de contrôle 2 se connecte au dispositif récepteur 1 directement, en mode Wi-Fi.

Lors d'une étape E3, le dispositif récepteur 1 transmet une requête de connexion à un point d'accès Wi-Fi au dispositif de contrôle 2.

Lors d'une étape E4, sur réception de la requête du dispositif récepteur 1, le dispositif de contrôle 2 affiche une interface utilisateur de saisie d'informations de connexion au point d'accès Wi-Fi local, ou passerelle, 3. L'interface de saisie invite l'utilisateur à saisir les données de connexion nécessaires pour connecter le dispositif récepteur 1 à la passerelle 3. Ces données de connexion comprennent un nom de réseau SSID et une clé de sécurité, ici une clé WPA, associés à la passerelle 3.

Lors d'une étape E5, l'utilisateur saisit les données de connexion requises (SSID et clé WPA associés à la passerelle 3) à l'aide d'un clavier, ici virtuel, du dispositif de contrôle 2 puis valide les données saisies.

Lors d'une étape E6, le dispositif de contrôle 2 transmet les informations de connexion saisies (SSID et clé WPA de la passerelle 3) au dispositif récepteur 2 qui les enregistre en mémoire.

Lors d'une étape E7, le dispositif récepteur 1 se connecte à la passerelle 3, en mode Wi-Fi, à l'aide des informations de connexion fournies par le dispositif de contrôle 2.

Une fois le dispositif récepteur 1 connecté à la passerelle 3, il interrompt le mode de fonctionnement Wi-Fi ad hoc. La connexion Wi-Fi directe entre le dispositif récepteur 1 et le dispositif de contrôle 2 est alors interrompue.

Les étapes qui viennent d'être décrites de connexion du dispositif récepteur 1 à la passerelle 3 sont mises en œuvre à chaque fois qu'aucune connexion Wi-Fi valide à un point d'accès Wi-Fi n'est détectée, autrement dit dans les deux cas suivants :
- à la première connexion à un point d'accès Wi-Fi (comme décrit précédemment) et
- dans une nouvelle zone de couverture Wi-Fi, lorsque le dispositif récepteur 1 est déplacé dans la zone de couverture d'un nouveau point d'accès Wi-Fi (en dehors de la zone couverte par le point d'accès Wi-Fi préalablement enregistré).

Le dispositif récepteur 2 mémorise les données de connexion des différents points d'accès auquel il se connecte, afin de pouvoir s'y reconnecter automatiquement le cas échéant. Lorsque le dispositif récepteur 2 se trouve dans la zone de couverture de deux points d'accès wifi enregistrés, il se connecte au point d'accès ayant le signal radio le plus fort.

La tablette 2 se connecte également en Wi-Fi à la passerelle 3, de façon connue.

Une fois connectés en Wi-Fi à la passerelle 3, le dispositif récepteur 1 et le dispositif de contrôle 2 peuvent communiquer l'un avec l'autre par l'intermédiaire de la passerelle 3.

On va maintenant décrire les étapes mises en œuvre par le système pour sélectionner et jouer un flux de données sur le dispositif de restitution multimédia 6, pour deux exemples de réalisation.

Dans un premier exemple de réalisation, le flux à jouer est un programme TV.

Lors d'une étape E10, un utilisateur lance sur le dispositif de contrôle 2 l'application d'interface 24 pour sélectionner un flux à jouer.

Lors d'une étape E11, le dispositif de contrôle 2 affiche une interface graphique permettant à l'utilisateur de sélectionner l'une des rubriques suivantes : TV, VOD, YouTube, mes contenus (vidéo, musique, image/photo).

Lors d'une étape E12, l'utilisateur sélectionne l'une des rubriques sur le dispositif de contrôle 1. Selon le premier exemple de réalisation, l'utilisateur sélectionne la rubrique TV. Lors d'une étape E13, le dispositif de contrôle 1 affiche sur son écran une interface de sélection de programmes TV, accessibles auprès du serveur Web de service de télévision. L'utilisateur visualise ainsi sur l'écran du dispositif de contrôle 2 la grille des programmes en cours sur différentes chaînes de télévision.

Lors d'une étape E14, l'utilisateur sélectionne l'un des programmes à l'aide du dispositif de contrôle 2, ici par une sélection tactile de ce programme sur l'écran du dispositif 2.

Lors d'une étape E15, suite à la sélection du programme, le dispositif de contrôle 2 reçoit une adresse de localisation du flux sur le réseau de l'Internet. L'adresse de localisation du flux comprend une adresse IP multicast de diffusion du programme TV sélectionné et se présente sous la forme d'une url. Sur réception de l'adresse de localisation du flux sélectionné, le dispositif de contrôle 2 récupère le flux à l'adresse reçue et joue le flux afin de permettre une prévisualisation du flux par l'utilisateur sur le dispositif de contrôle 2.

Lors d'une étape E16, l'utilisateur réalise une action spécifique, par exemple une sélection tactile d'un icône de commande ou un geste tactile prédéfini sur l'écran du dispositif de contrôle 2, pour commander un transfert de la lecture du programme TV sélectionné sur le dispositif de restitution multimédia 6. Le dispositif de contrôle 1 transmet alors au dispositif récepteur 1, lors d'une étape E17, une commande « PLAY » pour jouer le programme sélectionné. La commande contient l'adresse de localisation du flux de données de programme TV à jouer.

Lors d'une étape E18, sur réception de la commande, le dispositif récepteur 1 interprète la commande PLAY reçue et récupère le flux de programme TV sélectionné en utilisant l'adresse de localisation reçue dans la commande.

Lors d'une étape E19, le dispositif récepteur 1 reçoit le flux de programme TV, le décode et le transmet pour restitution à travers l'interface de sortie HDMI vers le dispositif de restitution multimédia 6.

Lors d'une étape E20, le dispositif de restitution multimédia 6 joue le programme TV.

Le dispositif de contrôle 2 permet également à l'utilisateur de transmettre d'autres commandes au dispositif récepteur 1, telles que notamment « PAUSE » pour mettre en pause un flux en cours de lecture, « STOP » pour un arrêt de la lecture du flux, une commande « FASTFORWARD N » pour lire en accéléré de N fois le flux, « FASTBACKFORWARD N » pour lire le flux en arrière en accéléré de N fois.

Dans un deuxième exemple de réalisation, le flux de données à jouer est un contenu vidéo stocké localement dans le PC 7. Dans cet exemple de réalisation, le PC 7 joue le rôle de serveur DLNA, le dispositif de contrôle 2 les rôles de contrôle DLNA, de renderer DLNA et de player DLNA, le dispositif récepteur 1 le rôle de renderer DLNA et le dispositif de restitution multimédia 6 le rôle de player DLNA.

Lors d'une étape E30, un utilisateur lance l'application d'interface 24 pour sélectionner un flux à jouer à partir de la tablette 2.

Lors d'une étape E31, le dispositif de contrôle 2 affiche l'interface graphique permettant à l'utilisateur de sélectionner l'une des rubriques suivantes : TV, VOD, YouTube, mes contenus (vidéos, musiques, photos).

Lors d'une étape E32, l'utilisateur sélectionne l'une des rubriques, ici mes contenus, sur le dispositif de contrôle 2.

Lors d'une étape E33, le dispositif de contrôle 2 affiche un gestionnaire de fichiers faisant apparaître une arborescence de fichiers stockés dans un ordinateur 7 et une arborescence de fichiers stockés dans le dispositif de contrôle 2.

Lors d'une étape E34, l'utilisateur sélectionne un fichier à jouer, correspondant par exemple à un contenu vidéo, à l'aide du dispositif de contrôle 2, par une sélection ici tactile du fichier sur l'écran du dispositif 2.

Lors d'une étape E35, suite à la sélection du fichier à jouer, le dispositif de contrôle 2 joue le fichier sélectionné afin de permettre à l'utilisateur de le pré-visualiser.

Lors d'une étape E36, l'utilisateur réalise une action spécifique pour commander la restitution du fichier sélectionné sur le dispositif de restitution 6. Cette action peut être une sélection tactile d'un icône affiché sur l'écran du dispositif de contrôle 2 ou un geste tactile spécifique de l'utilisateur sur l'écran du dispositif de contrôle 2.

Lors d'une étape E37, le dispositif de contrôle 2 transmet au dispositif récepteur 1 une commande DLNA pour jouer le fichier, ou flux de données, sélectionné. La commande transmise contient l'adresse de localisation du fichier sélectionné dans le réseau local DLNA. Par exemple, si l'utilisateur a sélectionné un contenu stocké sur l'ordinateur 7, la commande comporte une adresse URL pointant vers l'emplacement de stockage du fichier correspondant dans l'ordinateur 7.

Lors d'une étape E38, le dispositif récepteur 1 interprète la commande reçue et récupère le flux sélectionné par l'utilisateur auprès de l'ordinateur 7, jouant le rôle de serveur DLNA, à l'aide de l'adresse de localisation reçue.

Lors d'une étape E39, le dispositif récepteur 1 reçoit le flux de données du fichier sélectionné en streaming, c'est-à-dire en continu, le décode et le transmet pour restitution à travers l'interface de sortie HDMI vers le dispositif de restitution multimédia 6.

Lors d'une étape E40, le dispositif de restitution 6 joue le flux reçu, en l'espèce le contenu vidéo stocké sur l'ordinateur 7 faisant fonction de serveur DLNA.

La portée de l'invention n'est pas limitée aux deux exemples de réalisation décrits ci-dessus mais s'étend à tout flux de données, sélectionné à partir de l'interface utilisateur du dispositif de contrôle 2, et reçu par le dispositif récepteur 1 pour être joué sur une dispositif de restitution.

## Revendications

1. Système de contrôle pour jouer un flux de données comprenant :
• un premier dispositif (1), dit dispositif récepteur, comprenant :
- des moyens (10, 16) de réception du flux de données à jouer,
- des moyens (13) de transmission du flux de données reçu à travers des moyens (11) de sortie externe vers un dispositif apte à jouer le flux (6),
• un deuxième dispositif (2), dit dispositif de contrôle, distinct du dispositif récepteur (1), intégrant les moyens d'interface utilisateur (24) pour permettre à un utilisateur de sélectionner un flux de données à jouer et comprenant des moyens pour, suite à la sélection par un utilisateur d'un flux à jouer, transmettre au dispositif récepteur (1) une commande pour jouer le flux sélectionné,
ladite commande contenant des données de localisation du flux sélectionné,
ledit flux de données étant un contenu stocké sur un dispositif de stockage et lesdites données de localisation comprenant une adresse de stockage du contenu sur ledit dispositif de stockage, le premier dispositif (1) comprenant
∘ des moyens pour vérifier (E1) qu'il est connecté à un point d'accès sans fil (3) et
∘ des moyens (14,15, E2) pour établir, si le premier dispositif (1) n'est pas connecté à un point d'accès, une connexion sans fils directe avec le deuxième dispositif
∘ des moyens pour transmettre au deuxième dispositif (2), si le premier dispositif (1) n'est pas connecté à un point d'accès, sur ladite connexion sans fils directe, une requête de connexion (E3) pour obtenir en retour des données de connexion à un tel point d'accès
∘ des moyens (14,15, E6) pour obtenir en retour, si le premier dispositif (1) n'est pas connecté à un point d'accès, sur ladite connexion sans fil directe, des données de connexion à un tel point d'accès.

2. Système selon la revendication 1, dans lequel ledit flux de données est un contenu sélectionné parmi un contenu stocké sur un dispositif de stockage distant, externe au réseau local auquel appartient le dispositif récepteur (1) et accessible par l'intermédiaire d'un réseau externe (5), et/ou un contenu stocké sur un dispositif de stockage local, situé dans le réseau local auquel appartient le dispositif récepteur (1).

3. Système selon la revendication 1 ou 2, dans lequel
• le dispositif de contrôle (2) comprend des moyens (25) d'assistance de connexion du dispositif récepteur (1) à un point d'accès sans fil, agencés pour afficher une interface graphique de saisie de données de connexion dispositif récepteur (1) à un point d'accès sans fil et pour transmettre lesdites données de connexion saisies au dispositif récepteur (1).

4. Système selon l'une des revendications 1 à 3, dans lequel le dispositif récepteur (1) comprend des moyens de décodage (12) agencés pour décoder le flux de données reçu.

5. Système selon l'une des revendications 1 à 4, dans lequel les moyens d'interface utilisateur pour permettre à un utilisateur de sélectionner un flux de données à jouer comprennent des moyens d'affichage de données d'interface graphique.

6. Système selon l'une des revendications 1 à 5, dans lequel lesdits moyens d'interface utilisateur pour permettre à un utilisateur de sélectionner un flux de données à jouer sont agencés pour accéder à une interface utilisateur de sélection de contenus sur un serveur distant.

7. Système selon l'une des revendications 1 à 6, dans lequel, le dispositif récepteur (1) et le dispositif de contrôle (2) appartenant à un réseau local géré par un point d'accès sans fil, lesdits moyens d'interface utilisateur pour permettre à un utilisateur de sélectionner un flux de données à jouer sont agencés pour accéder à un gestionnaire de fichiers sur un serveur de stockage du réseau local.

8. Système selon l'une des revendications 1 à 7, dans lequel le dispositif récepteur (1) est dépourvu de moyens d'interface utilisateur pour permettre à un utilisateur de sélectionner un flux de données à jouer.

9. Dispositif récepteur (1) pour un système selon l'une des revendications 1 à 8, comprenant des moyens (10) de réception d'un flux de données vidéo à jouer, des moyens (11) de sortie externe vers un dispositif apte à jouer le flux reçu, des moyens (13) de transmission du flux de données reçu à travers les moyens de sortie (11), des moyens (16) de réception, en provenance d'un second dispositif distinct, dit dispositif de contrôle, d'une commande pour jouer un flux, ladite commande contenant des données de localisation du flux, ledit flux étant un contenu stocké sur un dispositif de stockage et lesdites données de localisation du flux comprenant une adresse de stockage du contenu sur ledit dispositif de stockage, des moyens pour vérifier (E1) qu'il est connecté à un point d'accès sans fil (3), des moyens (14,15, E2) pour établir, si le dispositif récepteur (1) n'est pas connecté à un point d'accès, une connexion sans fils directe avec le dispositif de contrôle, des moyens pour transmettre audit dispositif de contrôle (2), si le premier dispositif récepteur (1) n'est pas connecté à un point d'accès, une requête de connexion sur ladite connexion sans fils directe (E3) pour obtenir en retour des données de connexion à un tel point d'accès.

10. Dispositif récepteur (1) selon la revendication 9, **caractérisé en ce qu'**il est dépourvu de moyens d'interface utilisateur pour permettre à un utilisateur de sélectionner un flux de données à jouer.

11. Dispositif de contrôle (2) pour un système selon l'une des revendications 1 à 8, comprenant des moyens (24) d'interface utilisateur pour permettre à un utilisateur de sélectionner un flux de données à jouer, des moyens pour, suite à la sélection par un utilisateur d'un flux à jouer, et à une commande de l'utilisateur pour jouer le flux sélectionné sur un dispositif apte à jouer le flux (6), transmettre vers un autre dispositif, dit dispositif récepteur, une commande pour jouer le flux sélectionné, ladite commande contenant des données de localisation du flux sélectionné, ledit flux étant un contenu stocké sur un dispositif de stockage et lesdites données de localisation du flux comprenant une adresse de stockage du contenu sur ledit dispositif de stockage, des moyens pour établir une connexion sans fils directe avec le dispositif récepteur, des moyens pour recevoir, sur ladite connexion sans fils directe, une requête de connexion du dispositif récepteur pour obtenir en retour des données de connexion à un tel point d'accès, et des moyens pour transmettre sur ladite connexion sans fil directe des données de connexion à un tel point d'accès.

12. Dispositif de contrôle (2) selon la revendication 11, dans lequel les moyens d'interface utilisateur pour permettre à un utilisateur de sélectionner un flux de données à jouer comprennent des moyens d'affichage de données d'interface graphique.

13. Procédé de contrôle pour jouer un flux de données, comprenant :
• une étape (E14 ; E34) de sélection d'un flux de données à jouer à l'aide de moyens d'interface utilisateur,
• une étape (E18 ; E38) de réception du flux de données à jouer,
• une étape (E19 ; E39) de transmission du flux de données reçu vers un dispositif apte à jouer le flux (6),
• les étapes de réception d'un flux de données à jouer et de transmission du flux de données reçu vers un dispositif apte à jouer ledit flux (6) sont réalisées par un premier dispositif (1), dit dispositif récepteur ;
• l'étape de sélection d'un flux de données à jouer est réalisée par un deuxième dispositif (2), dit dispositif de contrôle, distinct du dispositif récepteur (1),
• et il est prévu une étape de transmission (E17 ; E37) par le dispositif de contrôle (2) au dispositif récepteur (1), suite à la sélection par un utilisateur d'un flux à jouer, d'une commande pour jouer le flux sélectionné, ladite commande contenant des données de localisation du flux sélectionné,
ladite commande étant transmise suite à une commande de l'utilisateur pour jouer le flux sélectionné sur le dispositif apte à jouer le flux, ledit flux de données étant un contenu stocké sur un dispositif de stockage et les données de localisation du flux sélectionné comprenant une adresse de stockage du contenu sur ledit dispositif de stockage, et le premier dispositif (1) vérifie (E1) s'il est connecté à un point d'accès, et s'il n'est pas connecté à un point d'accès (3),
∘ il établit une connexion sans fil directe avec le deuxième dispositif (E2)
∘ il transmet au deuxième dispositif (2) la requête de connexion à un point d'accès sans fils (E3) sur ladite connexion sans fils directe
∘ il obtient en retour, sur ladite connexion sans fils directe, des données de connexion à un tel point d'accès.

14. Procédé selon la revendication 13, dans lequel :
• le dispositif de contrôle (2) affiche (E4) une interface graphique de saisie de données de connexion du dispositif récepteur (1) à un point d'accès sans fil puis, suite à la saisie (E5) de données de connexion à un point d'accès sans fil par un utilisateur, transmet (E6) lesdites données de connexion saisies au dispositif récepteur (1).

## Patentansprüche

1. Steuersystem zum Abspielen eines Datenstroms, umfassend:
• ein erstes Gerät (1), Empfangsgerät genannt, umfassend:
- Mittel (10, 16) zum Empfangen des abzuspielenden Datenstroms,
- Mittel (13) zum Übertragen des empfangenen Datenstroms über externe Ausgangsmittel (11) zu einem zum Abspielen des Stroms geeigneten Gerät (6),
• ein zweites Gerät (2), Steuergerät genannt, das vom Empfangsgerät (1) verschieden ist, Benutzerschnittstellenmittel (24) beinhaltet, um einem Benutzer das Auswählen eines abzuspielenden Datenstroms zu ermöglichen, und Mittel umfasst, um nach dem Auswählen eines abzuspielenden Datenstroms durch einen Benutzer ein Kommando an das Empfangsgerät (1) zu übertragen, um den ausgewählten Strom abzuspielen,
wobei das Kommando Lokalisierungsdaten des ausgewählten Stroms enthält,
wobei der Datenstrom ein Inhalt ist, der auf einem Speichergerät gespeichert ist, und die Lokalisierungsdaten eine Speicheradresse des Inhalts auf diesem Speichergerät umfassen,
wobei das erste Gerät (1) umfasst
o Mittel, um zu überprüfen (E1), dass es mit einem drahtlosen Zugangspunkt (3) verbunden ist, und
o Mittel (14, 15, E2), um, falls das erste Gerät (1) nicht mit einem Zugangspunkt verbunden ist, eine direkte drahtlose Verbindung zu dem zweiten Gerät aufzubauen
o Mittel, um an das zweite Gerät (2), falls das erste Gerät (1) nicht mit einem Zugangspunkt verbunden ist, über die direkte drahtlose Verbindung eine Verbindungsanforderung zu übertragen (E3), um im Gegenzug Verbindungsdaten zu einem solchen Zugangspunkt zu erhalten
o Mittel (14, 15, E2), um, falls das erste Gerät (1) nicht mit einem Zugangspunkt verbunden ist, im Gegenzug über die direkte drahtlose Verbindung Verbindungsdaten zu einem solchen Zugangspunkt zu erhalten.

2. System nach Anspruch 1, bei dem der Datenstrom ein Inhalt ist, der ausgewählt ist unter einem Inhalt, der auf einem entfernten Speichergerät außerhalb des Nahbereichsnetzes, dem das Empfangsgerät (1) angehört, gespeichert ist und über ein externes Netz (5) zugänglich ist, und/oder einem Inhalt, der auf einem lokalen Speichergerät gespeichert ist, das sich in dem Nahbereichsnetz befindet, dem das Empfangsgerät (1) angehört.

3. System nach Anspruch 1 oder 2, bei dem
• das Steuergerät (2) Mittel (25) zum Unterstützen des Verbindens des Empfangsgeräts (1) mit einem drahtlosen Zugangspunkt umfasst, die dazu eingerichtet sind, auf einer grafischen Schnittstelle zur Eingabe von Verbindungsdaten Empfangsgerät (1) mit einem drahtlosen Zugangspunkt anzuzeigen und die eingegebenen Verbindungsdaten an das Empfangsgerät (1) zu übertragen.

4. System nach einem der Ansprüche 1 bis 3, bei dem das Empfangsgerät (1) Decodierungsmittel (12) umfasst, die dazu eingerichtet sind, den empfangenen Datenstrom zu decodieren.

5. System nach einem der Ansprüche 1 bis 4, bei dem die Benutzerschnittstellenmittel, um einem Benutzer das Auswählen eines abzuspielenden Datenstroms zu ermöglichen, Datenanzeigemittel mit grafischer Schnittstelle umfassen.

6. System nach einem der Ansprüche 1 bis 5, bei dem die Benutzerschnittstellenmittel, um einem Benutzer das Auswählen eines abzuspielenden Datenstroms zu ermöglichen, dazu eingerichtet sind, auf eine Benutzerschnittstelle zum Auswählen von Inhalten auf einem entfernten Server zuzugreifen.

7. System nach einem der Ansprüche 1 bis 6, bei dem, wenn das Empfangsgerät (1) und das Steuergerät (2) einem von einem drahtlosen Zugangspunkt verwalteten Nahbereichsnetz angehören, die Benutzerschnittstellenmittel, um einem Benutzer das Auswählen eines abzuspielenden Datenstroms zu ermöglichen, dazu eingerichtet sind, auf einen Dateimanager auf einem Speicherserver des Nahbereichsnetzes zuzugreifen.

8. System nach einem der Ansprüche 1 bis 7, bei dem das Empfangsgerät (1) keine Benutzerschnittstellenmittel umfasst, um einem Benutzer das Auswählen eines abzuspielenden Datenstroms zu ermöglichen.

9. Empfangsgerät (1) für ein System nach einem der Ansprüche 1 bis 8, umfassend Mittel (10) zum Empfangen eines abzuspielenden Videodatenstroms, externe Ausgangsmittel (11) zu einem zum Abspielen des empfangenen Stroms geeigneten Gerät, Mittel (13) zum Übertragen des empfangenen Datenstroms über die Ausgangsmittel (11), Mittel (16) zum Empfangen eines Kommandos zum Abspielen eines Stroms von einem verschiedenen zweiten Gerät, Steuergerät genannt, wobei das Kommando Lokalisierungsdaten des Stroms enthält, wobei der Strom ein auf einem Speichergerät gespeicherter Inhalt ist und die Lokalisierungsdaten des Stroms eine Speicheradresse des Inhalts auf dem Speichergerät umfassen, Mittel, um zu überprüfen (E1), dass es mit einem drahtlosen Zugangspunkt (3) verbunden ist, Mittel (14, 15, E2), um, falls das Empfangsgerät (1) nicht mit einem Zugangspunkt verbunden ist, eine direkte drahtlose Verbindung zu dem Steuergerät aufzubauen, Mittel, um an das Steuergerät (2), falls das erste Empfangsgerät (1) nicht mit einem Zugangspunkt verbunden ist, eine Verbindungsanforderung über die direkte drahtlose Verbindung zu übertragen (E3), um im Gegenzug Verbindungsdaten zu einem solchen Zugangspunkt zu erhalten.

10. Empfangsgerät (1) nach Anspruch 9, **dadurch gekennzeichnet, dass** es keine Benutzerschnittstellenmittel umfasst, um einem Benutzer das Auswählen eines abzuspielenden Datenstroms zu ermöglichen.

11. Steuergerät (2) für ein System nach einem der Ansprüche 1 bis 8, umfassend Benutzerschnittstellenmittel (24), um einem Benutzer das Auswählen eines abzuspielenden Datenstroms zu ermöglichen, Mittel, um nach dem Auswählen eines abzuspielenden Stroms durch einen Benutzer und nach einem Kommando des Benutzers, um den ausgewählten Datenstrom auf einem zum Abspielen des Stroms geeigneten Gerät (6) abzuspielen, zu einem anderen Gerät, Empfangsgerät genannt, ein Kommando zum Abspielen des ausgewählten Stroms zu übertragen, wobei das Kommando Lokalisierungsdaten des ausgewählten Stroms enthält, wobei der Strom ein auf einem Speichergerät gespeicherter Inhalt ist und die Lokalisierungsdaten des Stroms eine Speicheradresse des Inhalts auf dem Speichergerät umfassen, Mittel zum Aufbauen einer direkten drahtlosen Verbindung zum Empfangsgerät, Mittel zum Empfangen einer Verbindungsanforderung des Empfangsgeräts über die direkte drahtlose Verbindung, um im Gegenzug Verbindungsdaten zu einem solchen Zugangspunkt zu erhalten, und Mittel zum Übertragen der Verbindungsdaten zu einem solchen Zugangspunkt über die direkte drahtlose Verbindung.

12. Steuergerät (2) nach Anspruch 11, bei dem die Benutzerschnittstellenmittel, um einem Benutzer das Auswählen eines abzuspielenden Datenstroms zu ermöglichen, Datenanzeigemittel mit grafischer Schnittstelle umfassen.

13. Steuerverfahren zum Abspielen eines Datenstroms, umfassend:
• einen Schritt (E14; E34) des Auswählens eines abzuspielenden Datenstroms mithilfe von Benutzerschnittstellenmitteln,
• einen Schritt (E18; E38) des Empfangens des abzuspielenden Datenstroms,
• einen Schritt (E19; E39) des Übertragens des empfangenen Datenstroms zu einem zum Abspielen des Stroms geeigneten Gerät (6),
• die Schritte des Empfangens eines abzuspielenden Datenstroms und des Übertragens des empfangenen Datenstroms zu einem zum Abspielen des Stroms geeigneten Gerät (6) werden von einem ersten Gerät (1), Empfangsgerät genannt, ausgeführt;
• der Schritt des Auswählens eines abzuspielenden Datenstroms wird von einem zweiten Gerät (2), Steuergerät genannt, ausgeführt, das vom Empfangsgerät (1) verschieden ist,
• und es ist ein Schritt des Übertragens (E17; E37), nach dem Auswählen eines abzuspielenden Stroms durch einen Benutzer, eines Kommandos zum Abspielen des ausgewählten Stroms durch das Steuergerät (2) an das Empfangsgerät (1) vorgesehen, wobei das Kommando Lokalisierungsdaten des ausgewählten Stroms enthält,
wobei das Kommando nach einem Kommando des Benutzers zum Abspielen des ausgewählten Stroms auf dem zum Abspielen des Stroms geeigneten Gerät übertragen wird, wobei der Datenstrom ein auf einem Speichergerät gespeicherter Inhalt ist und die Lokalisierungsdaten des ausgewählten Stroms eine Speicheradresse des Inhalts auf dem Speichergerät umfassen, und das erste Gerät (1) überprüft (E1), ob es mit einem Zugangspunkt verbunden ist, und, falls es nicht mit einem Zugangspunkt (3) verbunden ist,
o eine direkte drahtlose Verbindung zu dem zweiten Gerät aufbaut (E2)
o an das zweite Gerät (2) die Verbindungsanforderung zu einem drahtlosen Zugangspunkt über die direkte drahtlose Verbindung überträgt (E3)
o im Gegenzug über die direkte drahtlose Verbindung Verbindungsdaten zu einem solchen Zugangspunkt erhält.

14. Verfahren nach Anspruch 13, bei dem:
• das Steuergerät (2) eine grafische Schnittstelle zum Eingeben von Verbindungsdaten des Empfangsgeräts (1) zu einem drahtlosen Zugangspunkt anzeigt (E4), dann, nach dem Eingeben (E5) von Verbindungsdaten zu einem drahtlosen Zugangspunkt durch einen Benutzer die eingegebenen Verbindungsdaten an das Empfangsgerät (1) überträgt (E6).

## Claims

1. Control system for playing a data stream comprising:
• a first device (1), termed receiver device, comprising:
- means (10, 16) for receiving the data stream to be played,
- means (13) for transmitting the data stream received through the means (11) of external output to a device able to play the stream (6),
• a second device (2), termed control device, distinct from the receiver device (1), integrating the user interface means (24) to allow a user to select a data stream to be played and comprising means for, subsequent to the selection by a user of a stream to be played, transmitting to the receiver device (1) a command to play the selected stream,
said command containing location data of the selected stream,
said data stream being a content stored on a storage device and said location data comprising a storage address of the content on said storage device,
the first device (1) comprising
∘ means for verifying (E1) that it is connected to a wireless access point (3) and
∘ means (14, 15, E2) for establishing, if the first device (1) is not connected to an access point, a direct wireless connection with the second device
∘ means for transmitting to the second device (2), if the first device (1) is not connected to an access point, on said direct wireless connection, a request for connection (E3) so as to obtain in return data in respect of connection to such an access point
∘ means (14, 15, E6) for obtaining in return, if the first device (1) is not connected to an access point, on said direct wireless connection, data in respect of connection to such an access point.

2. System according to Claim 1, in which said data stream is a content selected from among a content stored on a remote storage device, external to the local network to which the receiver device (1) belongs and accessible by way of an external network (5), and/or a content stored on a local storage device, situated in the local network to which the receiver device (1) belongs.

3. System according to Claim 1 or 2, in which
• the control device (2) comprises means (25) of assistance of connection of the receiver device (1) to a wireless access point, which are designed to display a graphical interface for inputting connection data receiver device (1) to a wireless access point and to transmit said inputted connection data to the receiver device (1).

4. System according to one of Claims 1 to 3, in which the receiver device (1) comprises decoding means (12) designed to decode the data stream received.

5. System according to one of Claims 1 to 4, in which the user interface means for allowing a user to select a data stream to be played comprise means for displaying graphical interface data.

6. System according to one of Claims 1 to 5, in which said user interface means for allowing a user to select a data stream to be played are designed to access a user interface for selecting contents on a remote server.

7. System according to one of Claims 1 to 6, in which, the receiver device (1) and the control device (2) belonging to a local network managed by a wireless access point, said user interface means for allowing a user to select a data stream to be played are designed to access a manager of files on a storage server of the local network.

8. System according to one of Claims 1 to 7, in which the receiver device (1) is devoid of user interface means for allowing a user to select a data stream to be played.

9. Receiver device (1) for a system according to one of Claims 1 to 8, comprising means (10) for receiving a video data stream to be played, means (11) of external output to a device able to play the stream received, means (13) for transmitting the data stream received through the output means (11), means (16) for receiving, from a second distinct device, termed control device, a command to play a stream, said command containing location data of the stream, said stream being a content stored on a storage device and said location data of the stream comprising a storage address of the content on said storage device, means for verifying (E1) that it is connected to a wireless access point (3), means (14, 15, E2) for establishing, if the receiver device (1) is not connected to an access point, a direct wireless connection with the control device, means for transmitting to said control device (2), if the first receiver device (1) is not connected to an access point, a request for connection via said wireless connection (E3) so as to obtain in return data in respect of connection to such an access point.

10. Receiver device (1) according to Claim 9, **characterized in that** it is devoid of user interface means for allowing a user to select a data stream to be played.

11. Control device (2) for a system according to one of Claims 1 to 8, comprising user interface means (24) for allowing a user to select a data stream to be played, means for, subsequent to the selection by a user of a stream to be played, and to a command of the user to play the selected stream on a device able to play the stream (6), transmitting to another device, termed receiver device, a command to play the selected stream, said command containing location data of the selected stream, said stream being a content stored on a storage device and said location data of the stream comprising a storage address of the content on said storage device, means for establishing a direct wireless connection with the receiver device, means for receiving, on said direct wireless connection, a request for connection of the receiver device so as to obtain in return data in respect of connection to such an access point, and means for transmitting on said direct wireless connection data in respect of connection to such an access point.

12. Control device (2) according to Claim 11, in which the user interface means for allowing a user to select a data stream to be played comprise means for displaying graphical interface data.

13. Control method for playing a data stream, comprising:
• a step (E14; E34) of selecting a data stream to be played with the aid of user interface means,
• a step (E18; E38) of receiving the data stream to be played,
• a step (E19; E39) of transmitting the data stream received to a device able to play the stream (6),
• the steps of receiving a data stream to be played and of transmitting the data stream received to a device able to play said stream (6) are carried out by a first device (1), termed receiver device;
• the step of selecting a data stream to be played is carried out by a second device (2), termed control device, distinct from the receiver device (1),
• and there is provided a step of transmission (E17; E37) by the control device (2) to the receiver device (1), subsequent to the selection by a user of a stream to be played, of a command to play the selected stream, said command containing location data of the selected stream,
said command being transmitted subsequent to a command of the user to play the selected stream on the device able to play the stream, said data stream being a content stored on a storage device and the location data of the selected stream comprising a storage address of the content on said storage device and the first device (1) verifies (E1) whether it is connected to an access point, and if it is not connected to an access point (3),
∘ it establishes a direct wireless connection with the second device (E2)
∘ it transmits to the second device (2) the request for connection to a wireless access point (E3) on said direct wireless connection
∘ it obtains in return, on said direct wireless connection, data in respect of connection to such an access point.

14. Method according to Claim 13, in which:
• the control device (2) displays (E4) a graphical interface for inputting data in respect of connection of the receiver device (1) to a wireless access point and then, subsequent to the inputting (E5) of data in respect of connection to a wireless access point by a user, transmits (E6) said inputted connection data to the receiver device (1).
